# EUROPEAN PATENT SPECIFICATION

(11) **EP 1 547 986 B1**
(45) Date of publication and mention of the grant of the patent: **21.05.2008**
(21) Application number: 03029587.7
(22) Date of filing: 22.12.2003
(51) Int. Cl.: C04B 24/26, C04B 24/32, C04B 28/00

(54) **High early strength superplasticizer**
Frühhochfeste Superbetonverflüssiger
Superplastifiant à haute résistance initiale

(43) Date of publication of application: 29.06.2005
(73) Proprietor: Mapei S.p.A., I-20158 Milano (IT)
(72) Inventor: Clemente, Paolo, 20158 Milano (IT); Ferrari, Giorgio, 20158 Milano (IT); Gamba, Mariele, 20158 Milano (IT); Pistolesi, Carlo, 20158 Milano (IT); Squinzi, Marco, 20158 Milano (IT); Surico, Francesco, 20158 Milano (IT); Badesso, Lino, 20158 Milano (IT)
(74) Representative: Minoja, Fabrizio

(56) References cited:
- EP-A- 0 884 290
- US-A- 5 362 324

## Description

### FIELD OF THE INVENTION

The present invention relates to a new superplasticizer for concrete and other cement materials capable to considerably increase the initial workability of the mixtures in the fresh and plastic periods and, at the same time, to develop early high mechanical strength, without causing any retardation of the hydration during the hardening stage. Due to these characteristics, with the new superplasticizer of the present invention it is possible to cast concrete mixtures characterised by high fluidity and very low mixing water which harden very fast, even in unfavourable climatic conditions, such as those characterised by the low temperatures typical of the winter time. More particularly, the present invention relates to a superplasticizer with the above mentioned properties which is further characterised by an intrinsic low air-entraining effect.

### DESCRIPTION OF THE STATE-OF-ART

Superplasticizers are extensively used in the construction field. Their addition to fresh concrete dramatically changes the rheological properties, producing a sharp decrease of the viscosity of the cement mixtures and allowing an easier casting of the concrete, even in the case of tight and complex reinforcing bar systems. In fact, flowing concrete can be easily pumped and completely fills all the parts of the moulds by effect of its own mass, thus reducing or completely saving the expensive and tricky work of mechanical vibration.

Furthermore, by using superplasticizers it is possible to considerably reduce the mixing water by a factor of more than 20 per cent, still having mixtures characterised by excellent fluidity. By this way, it is possible to easily cast dense, flowing concrete mixtures with reduced mixing water (low water-cement ratio) which, once hardened, are characterised by very high mechanical strength.

Traditional superplasticizers are based on the condensation products of salts of naphthalene sulfonic acid with formaldehyde (NSFC) and condensation products of melamine sulfonate with formaldehyde (MSFC). These superplasticizers, together with modified lignosulfonate (LGS), have been developed in the second half of the 20^{th} century and represent the 1^{st} and 2^{nd} generation superplasticizers. These superplasticizers possess reduced fluidifying capabilities and therefore they need to be added to concrete mixtures at relatively high dosages in order to produce an adequate reduction of the mixing water. These aspects render the use of superplasticizer less attractive and represented one of the main factors which discouraged the use of superplasticizers in the past.

Since the last two decades of 20^{th} century, a new class of superplasticizers was developed, based on hydrophilic copolymers between (meth)acrylic acid salts and (meth)acrylic esters. The first example of these superplasticizers, called "polycarboxylates", is described in Japanese Patent JP 58-74552 where a superplasticizer derived by copolymerising a) (meth)acrylic acid with b) methoxypolyethyleneglycol mono(meth)acrylic ester has been claimed. Monomer (b) can be easily prepared according to the known method of the art, such as those described in the United States Patents US 2,815,369, US 3,041,371 and US 3,989,740 by esterification of (meth)acrylic acid with monomethoxypolyoxyethyleneglycol in the presence of suitable solvents, esterification or transesterification catalysts and polymerisation inhibitors.

EP 0 884 discloses a cement admixture with improved cement dispersibility and high slump retainability, which comprises a polycarboxylic acid obtained by copolimerizing, in a specific ratio and under specific conditions, a polyalkylene glycol (meth)acrylate of formula (C) 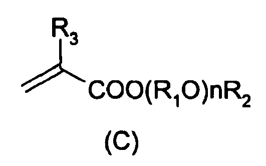 wherein R₁O is an oxyalkylene group
R₂ is an alkyl group with 1 to 22 carbon atoms, a phenyl group or an alkylphenyl group;
n ranges from 1 to 300 and
R₃ is a hydrogen atom or a methyl group
with (meth)acrylic acid (B) 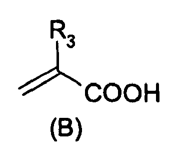 wherein R₃ is as defined above.

The new class of polycarboxylate superplasticizers is characterised by much higher efficiency in reducing the viscosity and the mixing water of concrete mixtures in comparison with the previous superplasticizers based on naphthalene sulfonate, melamine sulfonate and lignosulfonate. The long polyoxyethylene chains in the macromolecule are responsible for the better performances of polycarboxylate superplasticizers, because they better stabilise and disperse the cement particles in the fresh mixture through a mechanism called "steric effect", much more effective in comparison with the less efficient "electrostatic effect" of the previous superplasticizers, as pointed out by H. Huchikawa et al. ("Effect of Electrostatic and Steric repulsive Force of Organic Admixture on the Dispersion of Cement Particles in Fresh Cement Paste", Proceedings of the 10th International Congress on the Chemistry of Cement, Vol. 3, 3iii001, 1997). The higher dispersing efficiency of polycarboxylate superplasticizers allows to substantially reduce the dosage in comparison with 1^{st} and 2^{nd} generation superplasticizers in order to attain the same fluidity of the fresh concrete mixture (more than 60 per cent of reduction), with a corresponding reduction of the overall cost of the concrete. For these reasons, the use of polycarboxylate superplasticizers gained wider diffusion in the last decade and this new class of polymers is defined as the 3^{rd} generation of superplasticizers.

Nevertheless, the use of 3^{rd} generation superplasticizer described in Japanese Patent JP 58-74552 is itself not free of drawbacks. In fact, the polycarboxylate superplasticizers, due to their surface-activity, have a strong tendency to entrain air bubbles in the concrete during the mixing. As a consequence, the uncontrolled entrainment of air bubbles may produce adverse effects on the mechanical strength development and on the appearance of the concrete. In order to overcome this disadvantages, defoamers are often blended with the 3^{rd} generation superplasticizers but, being these substances insoluble in water, they tend to separate from the polymer solution and therefore their efficiency is reduced with the time of storage. Intrinsically low-foaming 3^{rd} generation superplasticizers are described in United States Patents US 5,362,324 and US 6,139,623, both relating to polymers in which the defoaming agent is bonded to the polymer chain. By this way, the defoaming agent is stabilised in the polymer solution and the defoaming capacity is maintained for longer time. The defoaming efficiency of these polymers can be eventually further improved by the addition of external defoaming agents characterised by high stability in the polymer solution. In particular, United States Patent US 5,362,324 describes a low air-entraining superplasticizer obtained by terpolymerization of monomers having the following formulas: 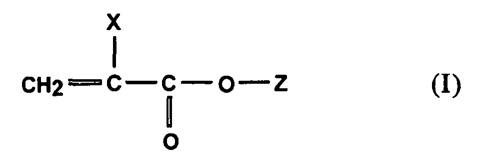 where Z = H, Na, Li, ½ Ca and X is H or CH₃, 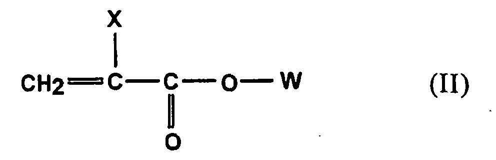 where W = -(-CH₂-CH₂ -O-)ₙ -CH₃, n is integer from 8 to 50 and X is H or CH₃; these monomers comprise polyethyleneglycolsmonomethylether(meth)acrylate with molecular weight from 200 to 2000; and 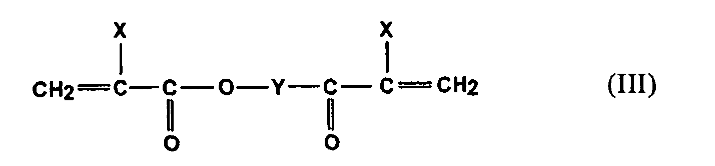 where 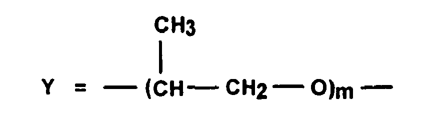 and m is an integer from 2 to 50. These monomers are preferably represented by polypropylene-glycol-di-(meth)acrylate with molecular weight of approximately between 280 and 3100, i.e. with m approximately between 2 and 50.

A second drawback of the 3^{rd} generation polycarboxylate superplasticizers is their effect in depressing the rate of the cement hydration, more evident when they are used at higher dosages and in unfavourable climatic conditions, such as those characterised by the low temperatures typical of the winter time. This aspect represents a limitation for their use because of the slow mechanical strength development in the first hours of hydration. In order to overcome this drawback, commercial products have been formulated with accelerating additives, such as calcium nitrate and alkanolamines, but this solution has both practical restrictions due to the poor stability of the resulting mixtures and commercial disadvantages owing to the higher dosages and costs. This disadvantages become evident even by using the aforementioned products described in United States Patent US 5,362,324.

### SUMMARY OF THE PRESENT INVENTION

The present invention relates to a new water soluble or water-dispersible polymer which does not retard the cement hydration rate and therefore does not badly affect the mechanical strength development of concrete at early ages. Due to these characteristics, with the new superplasticizer of the present invention it is possible to cast concrete mixtures characterised by high fluidity and very low mixing water which harden very fast, even in unfavourable climatic conditions, such as those characterised by the low temperatures typical of the winter time. Furthermore, the new superplasticizers of the present invention are characterised by a low air-entraining effect, even in the absence of external defoaming agents. The new superplasticizers of the present invention are obtained by terpolymerisation of the following monomers: 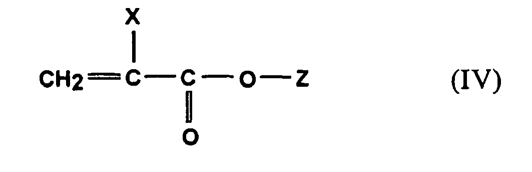 where Z = H, Na, Li, ½ Ca and X is H or CH₃, 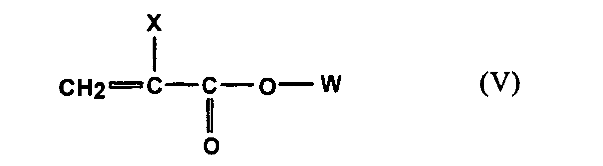 where W = -(-CH₂-CH₂ -O-)ₙ -CH₃, n is integer approximately between 51 and 300 and X is H or CH₃; these monomers comprise polyethyleneglycolsmonomethylether-(meth)acrylate with molecular weight approximately between 2000 and 13000; and 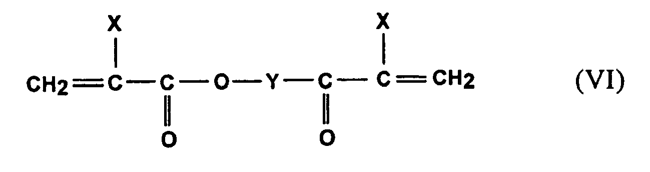 where 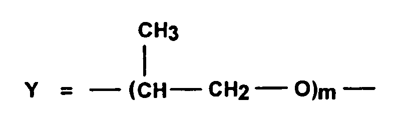 and m is an integer from 2 to 50. These monomers are preferably represented by polypropylene-glycol-di-(meth)acrylate with molecular weight of approximately between 280 and 11800, i.e. with m approximately between 2 and 200.

### DETAILED DESCRIPTION OF THE PRESENT INVENTION

The polymers of the present invention differ from those of the prior-art, and particularly from those described in the United States Patent US 5,362,324, for the molecular weight of the polyoxyethylene side chain of the polyethyleneglycol-monomethylether-(meth)acrylate. In the aforementioned patent, the number n of repeating units of ethylene oxide of formula (II) is an integer from 8 to 50 while in the present invention the number n of repeating units of ethylene oxide of formula (V) is an integer from 51 to 300. What has been surprisingly found is that the length of the side chains of the monomer of formula (V) is a fundamental parameter in determining the rate of the cement hydration and, consequently, the development of the mechanical strength. With the monomer of formula (II), which is characterised by a short side chain (with n integer lower than 50), the hydration rate of the cement is negatively influenced by the addition of the superplasticizer, as is the case of the polymers described in United States Patent US 5,362,324. On the other side, with the monomer of formula (V) of the present invention, which is characterised by a long side chain (with n integer higher than about 50), the hydration rate is less affected by the superplasticizer and the hardening of cement is very fast, even in unfavourable climatic conditions, such as those characterised by low temperatures typical of the winter time. The beneficial effects on the mechanical strength development become evident when the number n of repeating units of ethylene oxide of formula (V) is an integer higher than 50, but the best results in terms of mechanical strength development are obtained when n in formula (V) is an integer higher than 90.

The monomers of the formulas (IV), (V) and (VI) of the present invention can be combined in different ratios. Even though many combinations are possible, it has been observed that the best results, in terms of early mechanical strength development and air-entraining effect, are obtained when the amount of acrylic monomers (IV) and (V) is from 90 to 99.9 percent of the polymerizable mass and the amount of monomer (VI) is from 0.1 to 10 percent of the polymerizable mass. In turn, in order to obtain the best results in term of mechanical strength development, the weight ratio between acrylic monomers (IV) and (V) should be in the range from 0.05 to 0.5.

The different monomers can be polymerised by any of the free-radical solution methods known by the art, such as those described in the "Encyclopedia of Polymer Science and Technology" by Herman F. Mark. The molecular weight of the polymer can be regulated by the common methods known by the art, by properly selecting the polymerization temperature, the type and amount of initiators and eventually by adding chain transfer agents.

The scope and the characteristics of the polymers of the present invention are further detailed in the following examples.

### EXAMPLE 1

270 g of water are charged in a glass bottom-rounded reactor equipped with mechanical stirrer, thermometer and reflux condenser. The system is purged with nitrogen and heated at 90°C. A mixture of 180 g of polyethyleneglycolmonomethylether methacrylate of molecular weight 4468, 4.56 g of polypropyleneglycol dimethacrylate of molecular weight 861, 22.65 g of methacrylic acid, 180 g of water and 2.7 g of mercaptopropionic acid is added to the reactor in five hours. In the mean time, 30 g of a 10% solution of Na₂S₂O₈ are added by a separate funnel to the reaction mixture in five hours. After both the additions have been completed, the polymerised reaction mixture is neutralised with about 40 g of a 30% solution of NaOH. About 730 g of polymer solution are obtained, having a total solids content of about 30%.

### EXAMPLE 2

270 g of water are charged in a glass bottom-rounded reactor equipped with mechanical stirrer, thermometer and reflux condenser. The system is purged with nitrogen and heated at 90°C. A mixture of 150 g of polyethyleneglycolmonomethylether methacrylate of molecular weight 10188, 3.9 g of polypropyleneglycol dimethacrylate of molecular weight 861, 23.3 g of methacrylic acid, 204.5 g of water and 2.7 g of mercaptopropionic acid is added to the reactor in five hours. In the mean time, 30 g of a 10% solution of Na₂S₂O₈ are added by a separate funnel to the reaction mixture in five hours. After both the additions have been completed, the polymerised reaction mixture is neutralised with about 40 g of a 30% solution of NaOH. About 725 g of polymer solution are obtained, having a total solids content of about 30%.

### EXAMPLE 3

200 g of water are charged in a glass bottom-rounded reactor equipped with mechanical stirrer, thermometer and reflux condenser. The system is purged with nitrogen and heated at 90°C. A mixture of 187.3 g of polyethyleneglycolmonomethylether methacrylate of molecular weight 2368, 4.8 g of polypropyleneglycol dimethacrylate of molecular weight 861, 32.7 g of methacrylic acid, 75 g of water and 2.7 g of mercaptopropionic acid is added to the reactor in five hours. In the mean time, 330 g of a 1% solution of Na₂S₂O₈ are added by a separate funnel to the reaction mixture in five hours. After both the additions have been completed, the polymerised reaction mixture is neutralised with about 55 g of a 30% solution of NaOH. About 887 g of polymer solution are obtained, having a total solids content of about 35%.

### COMPARATIVE EXAMPLE 1

200 g of water are charged in a glass bottom-rounded reactor equipped with mechanical stirrer, thermometer and reflux condenser. The system is purged with nitrogen and heated at 90°C. A mixture of 216 g of polyethyleneglycolmonomethylether methacrylate of molecular weight 818, 6 g of polypropyleneglycol dimethacrylate of molecular weight 861, 60 g of methacrylic acid, 30 g of water and 2.7 g of mercaptopropionic acid is added to the reactor in five hours. In the mean time, 330 g of a 1% solution of Na₂S₂O₈ are added by a separate funnel to the reaction mixture in five hours. After both the additions have been completed, the polymerised reaction mixture is neutralised with about 100 g of a 30% solution of NaOH. About 945 g of polymer solution are obtained, having a total solids content of about 30%.

### COMPARATIVE EXAMPLE 2

270 g of water are charged in a glass bottom-rounded reactor equipped with mechanical stirrer, thermometer and reflux condenser. The system is purged with nitrogen and heated at 90°C. A mixture of 180 g of polyethyleneglycolmonomethylether methacrylate of molecular weight 4468, 22.65 g of methacrylic acid, 180 g of water and 2.7 g of mercaptopropionic acid is added to the reactor in five hours. In the mean time, 30 g of a 10% solution of Na₂S₂O₈ are added by a separate funnel to the reaction mixture in five hours. After both the additions have been completed, the polymerised reaction mixture is neutralised with about 40 g of a 30% solution of NaOH. About 730 g of polymer solution are obtained, having a total solids content of about 30%.

### COMPARATIVE EXAMPLE 3

200 g of water are charged in a glass bottom-rounded reactor equipped with mechanical stirrer, thermometer and reflux condenser. The system is purged with nitrogen and heated at 90°C. A mixture of 216 g of polyethyleneglycolmonomethylether methacrylate of molecular weight 818, 60 g of methacrylic acid, 30 g of water and 2.7 g of mercaptopropionic acid is added to the reactor in five hours. In the mean time, 330 g of a 1% solution of Na₂S₂O₈ are added by a separate funnel to the reaction mixture in five hours. After both the additions have been completed, the polymerised reaction mixture is neutralised with about 100 g of a 30% solution of NaOH. About 945 g of polymer solution are obtained, having a total solids content of about 30%.

### EXAMPLE 4

In this example the results of concrete tests made by using the polymers of the present invention, prepared according to Examples 1 and 3, are compared with those obtained with the polymer of Comparative Example 1, prepared according to the United States Patent US 5,362,324. All the concrete mixtures were prepared with the same water/cement ratio and aggregate/cement ratio. The coarse aggregate maximum diameter was 20 mm. All the concrete mixtures were cured in 150 mm stainless cubic moulds, both at low temperature (5°C) and in normal laboratory conditions (20°C).

Two different cement were used for the tests:
1) Type III portland cement according to ASTM C-150 (CEM I 52.5R according ENV 197/1)
2) Type I portland cement according to ASTM C-150 (CEM IV/A 42.5 according ENV 197/1)

Compressive strength of the specimens cured at low temperature (5°C) was measured after 24 hours of curing in the tests with Type III portland cement and after 48 hours in the tests with Type I portland cement, while that of specimens cured at normal laboratory conditions (20°C) was measured after 28 days of curing for both the cements tested. The comparative results of the concrete tests are reported in the following Table 1 for cement Type III and Table 2 for cement Type I.

**TABLE 1. Concrete tests using the superplasticizers of the present invention (Examples 1 and 3) in comparison with superplasticizer prepared according United States Patent US 5,362,324 (Comparative Example 1). Test with cement Type III according to ASTM C-150.**

| | | |
|---|---|---|
| Type of cement: | | portland Type III cement (ASTM C-150) |
| Dosage of cement: | | 360 kg/m³ |
| Coarse aggregate maximum diameter: | | 20 mm |
| Water/cement ratio W/C: | | 0.43 |
| Dosage of additives: | Example 1 | 0.25% active matter by weight of cement |
| | Example 2 | 0.25% active matter by weight of cement |
| | Comparative Example 1 | 0.25% active matter by weight of cement |

| Type of additive | Value of "n" in formula (V) | Air content (%) | Slump (mm) | Compressive Strength (MPa) | |
|---|---|---|---|---|---|
| | | | | Low Temperature (5°C) | Normal Conditions (20°C) |
| | | | | 24 hours | 28 days |
| Example 1 | 100 | 0.7 | 225 | 6.9 | 78 |
| Example 3 | 52 | 0.9 | 220 | 4.1 | 70 |
| Comparative Example 1 | 17 | 1.3 | 215 | 0.8 | 75 |

**TABLE 2. Concrete tests using the superplasticizers of the present invention (Examples 1 and 3) in comparison with superplasticizer prepared according United States Patent US 5,362,324 (Comparative Example 1). Test with cement Type I according to ASTM C-150.**

| | | |
|---|---|---|
| Type of cement: | | portland Type I cement (ASTM C-150) |
| Dosage of cement: | | 380 kg/m³ |
| Coarse aggregate maximum diameter: | | 20 mm |
| Water/cement ratio W/C: | | 0.46 |
| Dosage of additives: | Example 1 | 0.25% active matter by weight of cement |
| | Example 2 | 0.25% active matter by weight of cement |
| | Comparative Example 1 | 0.25% active matter by weight of cement |

| Type of additive | Value of "n" in formula (V) | Air content (%) | Slump (mm) | Compressive Strength (MPa) | |
|---|---|---|---|---|---|
| | | | | Low Temperature (5°C) | Normal Conditions (20°C) |
| | | | | 48 hours | 28 days |
| Example 1 | 100 | 1.5 | 210 | 15.9 | 57 |
| Example 3 | 52 | 2.2 | 220 | 11.0 | 59 |
| Comparative Example 1 | 17 | 1.6 | 215 | 9.7 | 56 |

The results of the concrete tests of Table 1 and Table 2 clearly indicate that the superplasticizers of the present invention (Examples 1 and 3) have the capacity to considerably accelerate the development of early age mechanical strength in conditions of low curing temperature, in comparison with the superplasticizers of Comparative Example 1 described in United States Patent US 5,362,324. In particular, the superplasticizer of Example 1, which is characterised by higher value of "n" in formula (V) (n = 100), develops earlier the mechanical strength at low temperature in comparison with the superplasticizer of Example 3, which is characterised by a lower value of "n" (n = 52), confirming that the molecular weight of the side chains of formula (V) is a fundamental parameter in determining the rate of the cement hydration and, consequently, the development of the mechanical strength. This aspect is of paramount importance in those applications in which concrete is cast in cold climates and it is necessary to develop mechanical strength in short time. The value of the final mechanical strength after 28 days of curing in normal conditions are quite similar for each cement tested, confirming the acceleration of early age mechanical strength of the superplasticizer of the present invention.

### EXAMPLE 5

In this example the results of mortar tests made by using the polymers of the present invention, prepared according to Examples 1 and 2, are compared with those obtained with the polymer of Comparative Example 1, prepared according to the United States Patent US 5,362,324. All the mortars were prepared by using a Type III portland cement according to ASTM C-150 (CEM I 52.5R according ENV 197/1). The different cement mixtures were prepared according ENV 196/1 method at the same W/C = 0.39 and by conditioning all the raw materials (cement, normalised sand and water) at 10°C prior to use. The efficiency of the different polymers as superplasticizers was evaluated by measuring the flow of fresh mortars (drop table test) according to UNI 7044 method at the same dosage of the polymers (0.25% as dry admixtures by mass of cement). In these conditions the workability of the different mortars resulted in the range 125 - 135%. The early age mechanical strength development was measured after curing the mortars at low temperature (10°C) in steel prismatic moulds (40 x 40 x 160 mm) for 14, 16 and 18 hours. The comparative results of the mortar tests are reported in the following Table 3.

**TABLE 3. Mortar tests using the superplasticizers of the present invention (Examples 1 and 2) in comparison with superplasticizer prepared according United States Patent US 5,362,324 (Comparative Example 1).**

| | | |
|---|---|---|
| Type of cement: | | portland Type III cement (ASTM C-150) |
| Normalised sand/cement ratio: | | 3.0 |
| Water/cement ratio W/C: | | 0.39 |
| Temperature of curing: | | 10°C |
| Dosage of additives: | Example 1 | 0.25% active matter by weight of cement |
| | Example 2 | 0.25% active matter by weight of cement |
| | Comparative Example 1 | 0.25% active matter by weight of cement |

| Type of additive | Value of "n" in formula (V) | Air content (%) | Flow (%) | Compressive Strength (MPa) | | |
|---|---|---|---|---|---|---|
| | | | | 14 hours | 16 hours | 18 hours |
| Example 1 | 100 | 5.5 | 132 | 3.7 | 6.7 | 11.0 |
| Example 2 | 230 | 5.8 | 135 | 4.4 | 7.5 | 12.4 |
| Comparative Example 1 | 17 | 6.1 | 129 | 0.6 | 1.0 | 1.8 |

The results of the mortar tests show that the polymer of Example 1 of the present invention, characterised by a value of n = 100 in formula (V), increase the early age mechanical strength in cold climates (10°C) by a factor of about 6, on average, in comparison with the polymer of Comparative Example 1, while the polymer of Example 2 of the present invention, characterised by a value of n = 230 in formula (V), increase the early age mechanical strength in cold climates (10°C) by a factor of about 7, confirming that the molecular weight of the side chains of formula (V) is a fundamental parameter in determining the rate of the cement hydration and, consequently, the development of the early age mechanical strength.

### EXAMPLE 6

The polymer of Example 4 of the present invention has been compared, in mortar tests, with the superplasticizer of Comparative Example 2. The results are presented in the following Table 4. The mortars were prepared by using Type III portland cement according to ASTM C-150 (CEM I 52.5R according ENV 197/1). The different cement mixtures were prepared according ENV 196/1 method at the same W/C = 0.39. The behaviour of the different polymers was evaluated by measuring the flow of fresh mortars (drop table test) according to UNI 7044 method and the air entraining effect, according to DIN 18555, at the same dosage of the polymers (0.25% as dry admixtures by mass of cement).

**TABLE 4. Mortar tests using the superplasticizers of the present invention (Examples 4) in comparison with superplasticizer prepared according Comparative Example 2.**

| | | |
|---|---|---|
| Type of cement: | | portland Type III cement (ASTM C-150) |
| Normalised sand/cement ratio: | | 3.0 |
| Water/cement ratio W/C: | | 0.38 |
| Dosage of additives: | Example 1 | 0.25% active matter by weight of cement |
| | Comparative Example 2 | 0.25% active matter by weight of cement |

| Type of additive | Air content (%) | Flow (%) | Compressive Strength (MPa) | | |
|---|---|---|---|---|---|
| | | | 16 hours | 18 hours | 24 hours |
| Example 1 | 7.5 | 134 | 12.0 | 17.1 | 30.0 |
| Comparative Example 2 | > 23 | 126 | 5.9 | 9.7 | 17.5 |
| Comparative Example 3 | > 23 | 132 | 0.4 | 1.0 | 3.8 |

The results of the mortar tests indicate that the presence of the third monomer, represented by polypropylene-glycol-di-(meth)acrylate is essential in producing the superplasticizers of the present invention which are characterised by low air entraining effect and high early mechanical strength.

## Claims

1. Superplasticizing additive for concrete and other cement mixtures with high strength development capacity and low air-entraining effect, comprising terpolymers of the following mixture of monomers respectively having formulas IV, V and VI 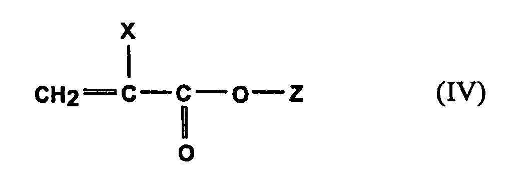 where Z = H, Na, Li, ½ Ca and X is H or CH₃, 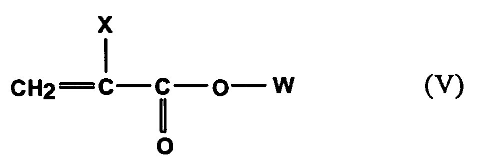 where W = -(-CH₂-CH₂ -O-)ₙ -CH₃, n is integer between 51 and 300 and X is H or CH₃; 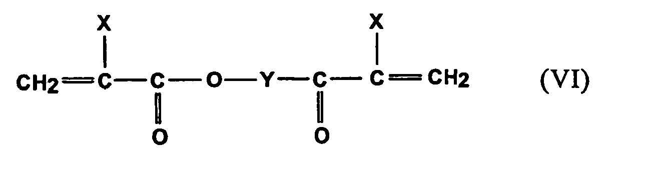 where 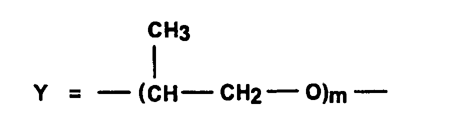 and m is an integer from 2 to 50.

2. Superplasticizing additive according to claim 1, wherein the monomer of formula V is polyethyleneglycolmonomethylether-(meth)acrylate of molecular weight from about 2000 to about 13200.

3. Superplasticizing additive according to claim 1, wherein the monomer of formula VI is polypropyleneglycol-di-(meth)acrylate of molecular weight between about 280 to about 11800.

4. Superplasticizing additive according to claim 1, wherein the amount of acrylic monomers (IV) and (V) ranges from 90 to 99.9 percent of the whole polymerized mass and the amount of monomer (VI) ranges from 0.1 to 10 percent of the whole polymerized mass.

5. Superplasticizing additive according to claim 1, wherein the weight ratio between acrylic monomers (IV) and (V) is in the range from 0.05 to 0.5.

6. Cement mixtures containing from 0.01 to 3.00 percent by weight of the cement, on a dry basis of the additive of the claim 1.

## Patentansprüche

1. Superweichmachender Zusatzstoff für Beton und andere Zementmischungen mit der Eigenschaft hoher Festigkeitsentwicklung und geringer Luftporenbildung, umfassend Terpolymere der folgenden Mischung von Monomeren, jeweils mit den Formeln IV, V und VI 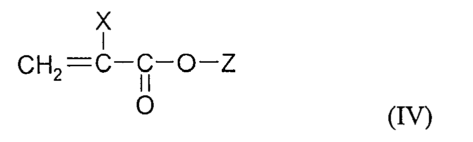 wobei Z = H, Na, Li, ½ Ca ist und X = H oder CH₃ 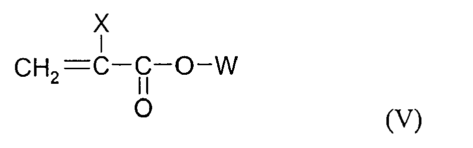 wobei W = (̵CH₂-CH₂-O)̵ₙ-CH₃ ist, n eine ganze Zahl zwischen 51 und 300 ist und X = H oder CH₃ ist; 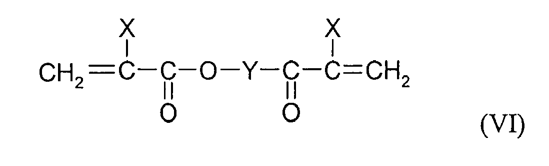 wobei 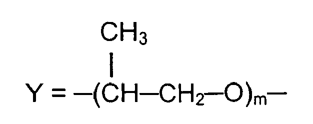 und m eine ganze Zahl von 2 bis 50 ist.

2. Superweichmachender Zusatzstoff nach Anspruch 1, wobei das Monomer von Formel V Polyethylenglykolmonomethylether-(meth)acrylat des Molekulargewichts von ungefähr 2000 bis ungefähr 13200 ist.

3. Superweichmachender Zusatzstoff nach Anspruch 1, wobei das Monomer von Formel VI Polypropylenglykol-di-(meth)acrylat des Molekulargewichts von ungefähr 280 bis ungefähr 11800 ist.

4. Superweichmachender Zusatzstoff nach Anspruch 1, wobei die Menge an Acrylmonomeren (IV) und (V) von 90 bis 99,9 Prozent der gesamten polymerisierten Masse reicht und die Menge an Monomer (VI) von 0,1 bis 10 Prozent der gesamten polymerisierten Masse reicht.

5. Superweichmachender Zusatzstoff nach Anspruch 1, wobei das Gewichtsverhältnis zwischen den Acrylmonomeren (IV) und (V) im Bereich von 0,05 bis 0,5 liegt.

6. Zementmischungen enthaltend von 0,01 bis 3,00 Gewichtsprozent des Zements an einer trockenen Basis des Zusatzstoffes nach Anspruch 1.

## Revendications

1. Adjuvant superplastifiant pour du béton et d'autres mélanges à base de ciment avec une grande capacité de développement de résistance et un faible effet d'entraînement d'air, comprenant des terpolymères du mélange suivant de monomères ayant respectivement les formules IV, V et VI 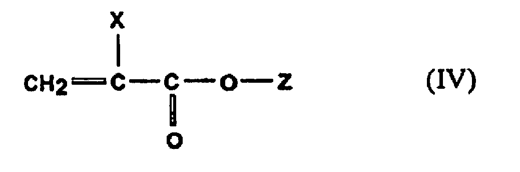 où Z = H, Na, Li, ½ Ca et X est H ou CH₃, 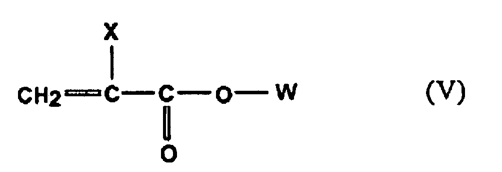 où W = -(-CH₂-CH₂-O-)ₙ-CH₃, n est un nombre entier entre 51 et 300 et X est H ou CH₃ ; 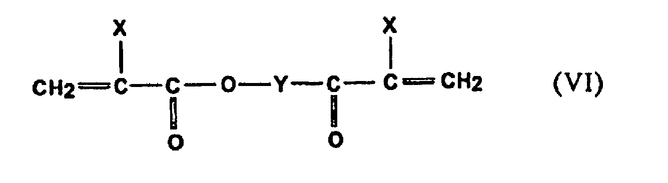 où 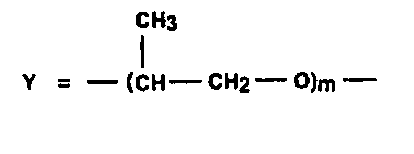 et m est un nombre entier de 2 à 50.

2. Adjuvant superplastifiant selon la revendication 1, dans lequel le monomère de formule V est un (méth)acrylate de polyéthylèneglycolmonométhyléther d'un poids moléculaire d'environ 2 000 à environ 13 200.

3. Adjuvant superplastifiant selon la revendication 1, dans lequel le monomère de formule VI est un di-(méth)acrylate de polypropylèneglycol d'un poids moléculaire entre environ 280 et environ 11 800.

4. Adjuvant superplastifiant selon la revendication 1, dans lequel la quantité de monomères acryliques (IV) et (V) varie de 90 à 99,9 pour cent de la masse entière polymérisée et la quantité de monomère (VI) varie de 0,1 à 10 pour cent de la masse entière polymérisée.

5. Adjuvant superplastifiant selon la revendication 1, dans lequel le rapport pondéral entre les monomères acryliques (IV) et (V) est dans la plage de 0,05 à 0,5.

6. Mélanges à base de ciment contenant de 0,01 à 3,00 pour cent en poids du ciment, sur une base sèche de l'adjuvant selon la revendication 1.
